Europäisches Patentamt

(19) European Patent Office        (11) Publication number: **0 165 552**

Office européen des brevets                                **A2**

# (12) EUROPEAN PATENT APPLICATION

(21) Application number: **85107260.3**

(22) Date of filing: **12.06.85**

(51) Int. Cl.⁴: **C 02 F 3/12**
**C 02 F 3/18**

(30) Priority: **16.06.84 GB 8415415**

(43) Date of publication of application:
**27.12.85 Bulletin 85/52**

(84) Designated Contracting States:
**AT DE FR IT NL SE**

(71) Applicant: **WHITEHEAD & POOLE LIMITED**
**P.O. Box No. 9 Milltown Street**
**GB-Radcliffe, Manchester M26 9NU(GB)**

(72) Inventor: **Hagan, James Gerald**
**10 Royston Close**
**Greenmount, Bury Lancashire(GB)**

(72) Inventor: **Denton, Rodney Stuart**
**76 Chester Road**
**Poynton, Stockport Cheshire(GB)**

(74) Representative: **Lally, William et al,**
**FORRESTER & BOEHMERT Widenmayerstrasse 4/I**
**D-8000 München 22(DE)**

(54) **Aeration plant.**

(57) An aeration tank, particularly for use in the treatment of sewage liquor, trade effluent and the like, comprises a chamber (6), generally oval in plan, to provide a continuous flow path F, inlet and outlets pipes (10, 12) being provided in conventional manner. Extending across the flow path is impeller means in the form of a rotor (14) on which paddles (16) are mounted. Downstream of the impeller and extending across the flow path is a deflector means afforded by a baffle (18). The baffle extends from a level adjacent to, preferably above, the surface of the liquor in the tank to a level below the surface of the liquor, and is inclined so as to cause liquor impelled by said impeller means, and air entrapped in the liquor, to be deflected towards the bottom of the tank. In this manner a high oxygen input may be obtained with a relatively low power input.

**Title:** "Aeration Plant"

## Description of Invention

This invention is concerned with improvements relating to aeration plant, particularly but not exclusively for use in the treatment of sewage liquor, trade effluent and the like.

In the treatment of sewage liquor, it is necessary to increase the oxygen content of the liquor to permit aerobic breakdown of the liquor. conventionally used for this purpose is a tank, around which the liquor is circulated. A typical tank is oval in plan view, comprising a central dividing wall, typically being 3m to 4m deep, 30m to 100m long, and around which the liquor is circulated in (typically) three to fifteen minutes, sewage liquor being continuously circulated for a dwell period typically in the region of eight to twenty four hours, treated liquor being continuously removed and untreated liquor being continuously added.

In such plant, it is common practice to utilise means to increase the oxygen content of the liquor, to reduce the dwell time, and thus increase throughput. One method of increasing the oxygen content is to circulate the liquor by the use of a horizontal impeller comprising a number of paddles, the axis being situated slightly above the surface of the liquor such that the paddles on striking the liquor cause circulatory motion thereof whilst introducing air into the liquor.

Nothwithstanding, continuous efforts are being made to increase the quantity of dissolved oxygen without unduly increasing the power consumed.

For example, tanks have been used in which the flow of liquor has been forced to undergo sharp changes of direction. Additionally, in some installations the impeller has been positioned close to such a "corner" to produce turbulence in the region of the corner.

In most aeration plants of the kind described above, the efficiency ratio, Kg oxygen/Kwh lies within the range 2.0 to 2.5. In view of the continuous nature of operation of the plant, and the high power requirements, considerable savings may be made by small increases (e.g. 10%) in this ratio.

According to this invention, there is provided an aeration tank for the treatment of liquor, the tank defining a continuous flow path, comprising impeller means to induce flow of liquor around said flow path, wherein there is provided in the flow path downstream of the impeller means a deflector means which extends from a level adjacent to the surface of the liquor in the tank to a level below the surface of the liquor, the deflector means being operative to cause liquor, impelled by said impeller means, and air entrapped in the liquor, to be deflected towards the bottom of the tank.

It has been found that by positioning the deflector means such that substantially no flow of liquor over the deflector means takes place, the deflector means effectively causing most of the liquor impelled by the impeller means to be diverted downwardly in the tank, a noticable improvement may be obtained in the efficency ratio of the tank.

Preferably the deflector means extends from a level above the surface of liquor, such that no flow of liquor over the deflector means takes place.

The deflector means is preferably in the form of a baffle (which may be continuous sheet, or perforated) extending substantially the full width of the flow channel, and may extend vertically or be inclined at any suitable angle to the vertical.

Preferably however the baffle is inclined at an angle of between $30^{\circ}$ and $60^{\circ}$ to the vertical in an orientation such that liquor on striking the baffle is deflected downwardly towards the bottom of the tank.

This expedient has been found to be a more economical method of increasing the oxygen content of the liquor than those previously suggested.

This invention is particularly (but not exclusively) advantageous where the impeller means comprises a rotor, the axis of rotation of which extends horizontally generally at right angles to the direction of liquor flow, and a number of paddles extending from the rotor generally radially and longitudinally thereof.

Thus, preferably the baffle extends into the liquor from a position higher than the lowermost extremity of the rotor.

There will now be given a detailed description, to be read with reference to the accompanying drawings, of an aeration tank which has been selected for the purposes of illustrating this invention by way of example.

In the accompanying drawings:-

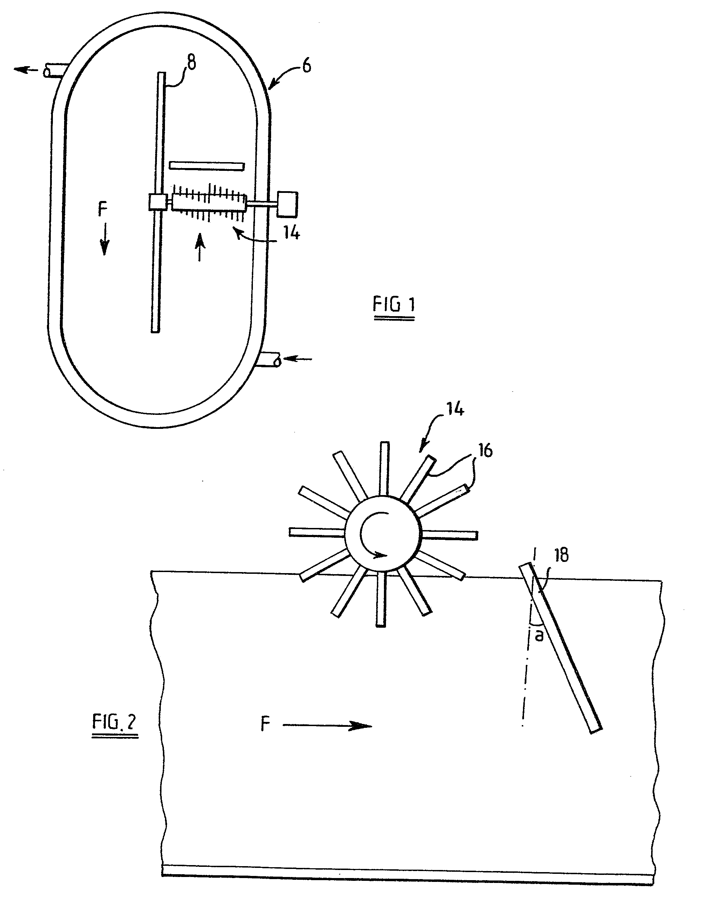

FIGURE 1 is a plan view of the aeration tank which is the preferred embodiment of this invention; and

FIGURE 2 is a schematic side elevational view illustrating impeller means and deflector means of the tank.

The tank which is the preferred embodiment of this invention comprises a chamber 6, generally oval in plan, divided by a central wall 8 to provide a continuous flow path F, inlet and outlet pipes 10, 12 being provided in conventional manner.

Extending across the flow path is impeller means in the form of a rotor 14 on which paddles 16 are mounted. Conveniently the paddles are arrayed generally helically in the longitudinal direction of the rotor.

The rotor is typically rotated at about 70 r.p.m., the paddles driving the liquor around the flow path in the direction indicated, and to induce bubbles of air into the liquor, to assist in the aerobic digestion of the liquor.

Located downstream of the impeller and extending across the flow path is deflector means afforded by a baffle 18. The baffle member 18 extends downwardly into the liquor from a position slightly above the surface thereof, conveniently extending about one quarter - one third of the way into the liquor.

The extent to which the baffle element extends above the surface is preferably sufficient to ensure no significant flow of liquor, under the action of the impeller, over the top of the baffle element.

The baffle is inclined at an angle $\underline{a}$ to the vertical, typically between $30^{o}$ - $60^{o}$, (the direction of inclination being away from the impeller in the downward direction) such that liquor impelled in the direction F by the impeller on striking of the baffle member 18, is forced downwardly, towards the bottom of the tank, carrying downwardly the bubbles of air produced by the impeller, and increasing the rate at which the oxygen is dissolved by the liquor.

In a specific embodiment, an impeller is used having a diameter of 1.0 meter, and the baffle element is positioned approximately 7 meters downstream of the rotor at an angle of $45^{o}$, extending from 500 mm above the liquor level to 1 meter below the liquor level. With this configuration it has found that an oxygen input of 108 kilogram per hour may be obtained with an efficiency of 3.0 kg/kwH.

The features disclosed in the foregoing description, or the accompanying drawings, expressed in their specific forms or in terms of a means for performing the disclosed function, or a method or process for attaining the disclosed result, or a class or group of substances or compositions, as appropriate, may, separately or in any combination of such features, be utilised for realising the invention in diverse forms thereof.

CLAIMS:

1.      An aeration tank for the treatment of liquor, the tank defining a continuous flow path (F), comprising impeller means (14) to induce flow of liquor around said flow path, wherein there is provided in the flow path downstream of the impeller means a deflector means (18) which extends from a level adjacent to the surface of the liquor in the tank to a level below the surface of the liquor, the deflector means being operative to cause liquor impelled by said impeller means, and air entrapped in the liquor, to be deflected towards the bottom of the tank.

2.      An aeration tank according to Claim 1 wherein the deflector means (18) extends from a level above the surface of the liquor.

3.      An aeration tank according to one of Claims 1 and 2 wherein the deflector means is in the form of a baffle (18) extending substantially the full width of the flow channel(F).

4.      An aeration tank according to any one of the preceding claims wherein the baffle is inclined at an angle of between $30^{\circ}$ and $60^{\circ}$ to the vertical in an orientation such that liquor on striking the baffle (18) is deflected downwardly towards the bottom of the tank.

5.      An aeration tank according to Claim 4 wherein the baffle extends at an angle of about $45^{\circ}$.

6.      An aeration tank according to any one of the preceding claims wherein the impeller means (14) comprises a rotor, the axis of rotation of which extends horizontally generally at right angles to the direction of liquor flow, and a number of paddles (16) extending from the rotor generally radially and longitudinally thereof.

7.     An aeration tank according to Claim 6 wherein the baffle (18) extends into the liquor from a position higher than the lowermost extremity of the rotor.

8.     An aeration tank for the treatment of liquor, constructed and arranged substantially as hereinbefore described with reference to the accompanying drawing.

9.     Any novel feature or novel combination of features hereinbefore described and/or shown in the accompanying drawing.

FIG 1

FIG. 2